# EUROPEAN PATENT SPECIFICATION

(11) **EP 0 894 703 B1**
(45) Date of publication and mention of the grant of the patent: **31.03.2004**
(21) Application number: 98113345.7
(22) Date of filing: 17.07.1998
(51) Int. Cl.: B62L 3/02, B62K 23/06

(54) **Hydraulic reservoir assembly for motorcycle brake system**
Hydraulikbehälteranordnung für Motorrad- Bremssystem
Assemblage de réservoir hydraulique pour dispositif de freinage pour motocyclette

(30) Priority: 23.07.1997 IT MI970561 U
(43) Date of publication of application: 03.02.1999
(73) Proprietor: M.V. AGUSTA S.p.A, 21100 Varese (IT)
(72) Inventor: Tamburini, Massimo, 47895 Domagnano (SM)
(74) Representative: Giambrocono, Alfonso, Dr. Ing.

(56) References cited:
- GB-A- 2 226 112

## Description

It is the object of present discovery a pump-tank assembly unit for braking circuit fluid of a motorcycle according to preamble of principal claim.

As it is known, in a motorcycle pump for liquid of braking circuit which acts on vehicle wheels is located on handlebars. To this usually a tank is associated containing above mentioned fluid. Usually, these components (determining pump-tank assembly unit) are associated between them by means of a sleeve coupled to this pump and to this tank by any system (for example, by means of lockrings, clamps, etc.). These solutions show overall dimensions which are relatively important and this has a negative influence in positioning pump-tank assembly unit on handlebars and on field of vision, by vehicle driver, of instrument panel placed in front of handling bar. These overall dimensions can also prevent to obtain optimum steering angles of handlebars and it has a negative influence on construction of front dome of motorcycle having a correct aerodynamic configuration.

Besides, particular form of connection between pump and tank by means of a sleeve can cause, with time, cracking of this last one (with obvious inconveniences in using vehicle) or losses near attachment areas of said sleeve to pump and to tank.

Pump-tank assembly units are also known in which tank is monolithic or attached by means of a screw to pump body such as shown in GB-A-2 226 112. These solutions show inconvenience to have, an assembly unit of mentioned type that in case it is monolithic, it is not separable (for example for a replacement) in its single components. While, in case there is a screw, in case of breaking or extraction of this attaching part, tank is detached not having any safety system. Besides, problems of overall dimensions previously mentioned are always present.

Purpose of present discovery is that to provide a pump-tank assembly unit that is improved in reference to similar known assembly units.

In particular, purpose of present discovery is that to provide an assembly unit of above mentioned type having reduced overall dimensions with reference to known assembly units, that it is of simple assembly and disassembly and that it is of reliable use.

These and other purposes which will become apparent to those skilled in the art are obtained by a pump-tank assembly unit according to enclosed claims.

For a better understanding of present discovery it is enclosed for only indicative reasons, but not restrictive ones, following drawing, in which:

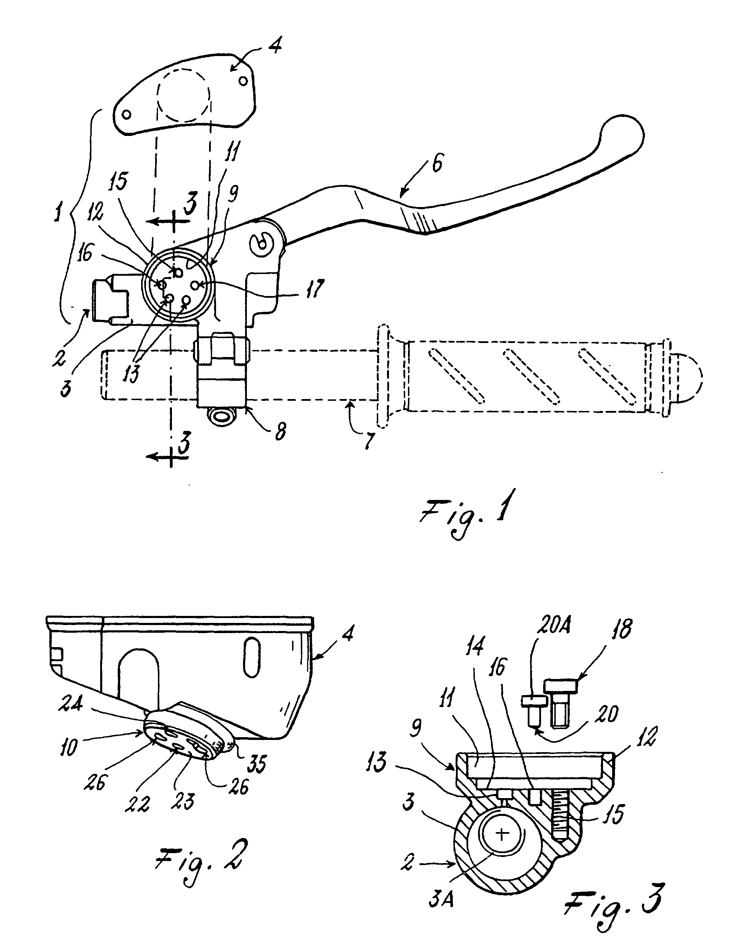

figure 1 shows an upper view, exploded view, of a pump-tank assembly unit associated with handlebars;
figure 2 shows a side view of a tank according to this discovery;
figure 3 shows a cross section along line 3-3 of figure 1;
figure 4A shows an upper prospective view of a first phase of coupling between tank and pump of assembly unit according to discovery;
figure 4B shows an enlarged, upper, view of a detail of assembly unit of figure 4A;
figures 5A and 5B are similar to figures 4A and 4B, but show assembly unit according to discovery in a different phase of the coupling between tank and pump assembly unit; and
figure 6 shows a prospective upper view of an assembly unit according to discovery in an assembled position.

With reference to mentioned figures, a pump-tank assembly unit is generically indicated with 1 and it includes a pump 2 provided with a body 3 and a tank 4 for fluid of braking circuit of motor vehicle. Within body of pump 3 a moving up and down piston 3A is present supplied with proper sealing parts (not shown).

Assembly unit 1 is associated to a usual lever to drive brake 6 and is attached to a handlebars 7, for example by means of an attachment part of arm band type (8), which is known.

According to this discovery, body of pump 3 includes a portion 9 capable to couple with, by means of a bayonet cap type of coupling, a part 10 of tank 4. More in details, this portion 9 includes a housing 11 defined by a ring shaped shoulder 12 and in communication with body of pump 3 through ducts 13 opened in this last one. In a flat part 14 of portion 9, in which duct 13 is opened, many holes 15,16 and 17 are constructed: hole 15 is threaded and it is capable to cooperate with an attachment screw 18 of tank 4 to body of pump 3, while holes 16 and 17 are capable to cooperate with mushrooms shaped hubs 20 which can be inserted by pressure in these holes. This screw 18 also cooperates with a passing through hole 22 constructed within a flat portion 23 provided in part 10 of tank 4; in this portion 23 apertures 24 are constructed capable to cooperarate with ducts 13 above mentioned and buttonhole shaped holes 26 capable to cooperate with mushroom shaped hubs 20. These buttonholes show a widened part 26A of greater dimensions to head 20A of hubs 20 and a narrower part 26B of smaller dimensions than that of head 20A of said hubs.

Tank 4 includes a cavity 30 confined by a wall 31 and that can be closed by a flat closing unit 33 which can be attached to this wall by means of screws (not shown) or similar attachment means which can be inserted in threaded holes 34 of said wall.

Around part 10 of tank 4, capable to be inserted into housing 11, a seal ring 35 is present or a similar seal part.

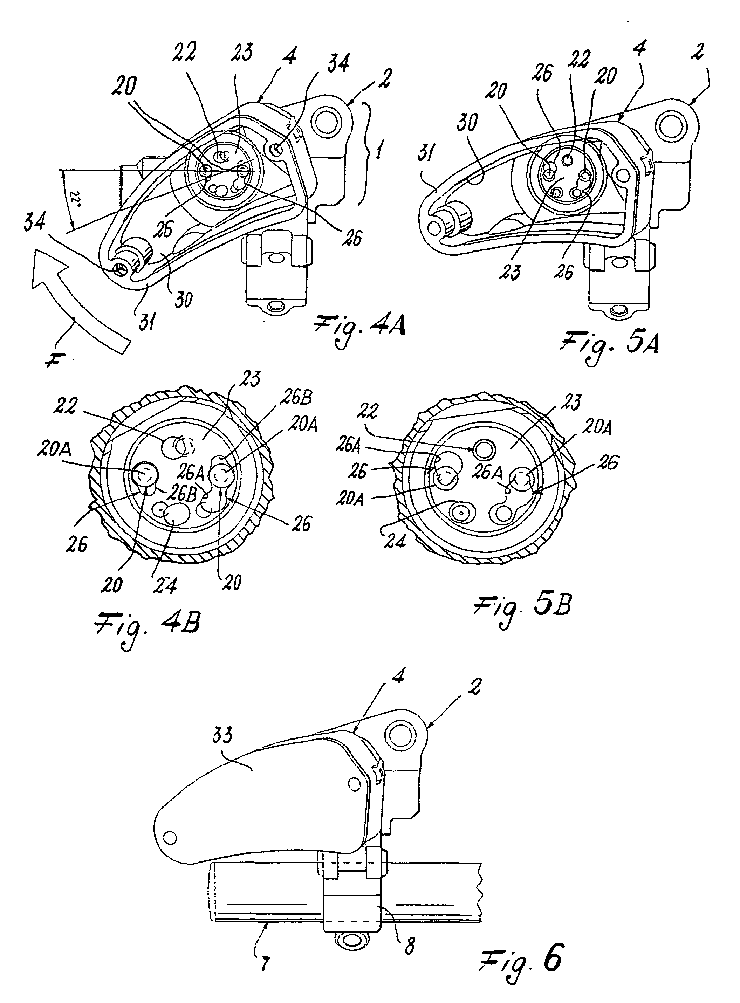

Reference to figures 4A, 4B, 5B, connection of tank 4 and of pump 3 is now described. First of all above said tank is placed on portion 9 of pump body 3 and part 10 of tank is inserted in housing 11 of this last one. During this operation, heads 20A of mushroom shaped hubs get into parts 26A of buttonholes 26 provided in portion 23 of part 10 of tank 4. Then tank is turned clockwise on pump body (arrow F in figure 4A) so that heads 20A of hubs 20 are taken over parts 263, narrow ones, of buttonholes 26.

Thus bayonet cap coupling is obtained between tank and pump and impossibility of a mutual detachment between these last ones owing to interference of heads 20A with portion 23 of part 10 of tank 4. At this time tank is blocked to pump by means of screw 18 inserrted into holes 15 and 22.

Obviously, bayonet cap coupling of above mentioned type can also be obtained by placing mushroom shaped hubs 20 in related holes provided for this purpose in part 10 of tank and designing buttonholes 26 in flat part 14 of portion 9 of pump body.

Thank to this discovery, there is a firm and safe coupling between tank 4 and pump 2: namely, also in case that screw 18 should be taken out from its threaded location 15 (or screw should break), tank 4 does not detach from pump owing to bayonet cap coupling and owing to rotation in opposite direction to that of arrow F in figure 4A (which would aim to detach parts attached between them) is prevented by presence of handlebars.

Assembly unit 1 according to this discovery has compact dimensions which allow a better field of view of instrument panel.

Particular shape of pump body and of tank also allows possibility of use of a remote tank, that is separate from pump. As a matter of fact it is sufficient to insert an appropriate sleeve on bayonet cap type of coupling with relevant connection pump-tank pipe.

New position of pump-tank assembly unit allows also a more linear routing of command cable of accelerator (because it can pass over assembly unit) with decrease of problems of jamming of this command due to more or less twisted routes.

A particular form of embodiment of this discovery has been illustrated; however, others are possible (as that one which provides other attachment systems by bayonet cap type of coupling between tank and pump).

## Claims

1. Pump-tank assembly unit of a braking circuit fluid of a motorcycle of the type including a pump (2) provided with its own body (3), and a tank (4), said assembly unit (1) being associated with handlebars (7) of vehicle, said tank (4) being separable from body of pump (3), **characterized in that** bayonet cap type coupling means are included (20,26) capable to allow an operational coupling between tank and pump body (3).

2. Pump-tank assembly unit as claimed in claim 1, **characterized in that** means (20,26) capable to allow bayonet cap coupling are provided in pump (3) body and tank (4), coupling between these parts to be accomplished in a direct way.

3. Pump-tank assembly unit as claimed in claim 1, **characterized in that** means (20,26) capable to allow bayonet cap coupling are provided on pump (3) body, on tank (4) and at opposite end parts of a connection unit like a sleeve or similar device capable to allow a remote location of tank (4) with reference to pump (3) body.

4. Pump-tank assembly unit as claimed in claim 2, **characterized in that** pump (3) body includes a portion (9) having a housing (11) capable to accept a part (10) of tank (4), in said portion (9) being provided connection parts (20) with a widened free end part (20A) capable to cooperate with buttonhole shaped holes (26) provided within a flat portion (23) of part (10) of above mentioned tank, said connection units (20) and buttonholes (26) defining capable means to allow bayonet cap type coupling between tank (4) and pump (2), in flat portion (23) of above said part (10) of tank being provided with openings (24) in communication with ducts (13) provided in pump (3) body which open in this last one.

5. Pump-tank assembly unit as claimed in claim 2, **characterized in that** pump (3) body includes a portion (9) having a housing (11) capable to accept a part (10) of tank (4), in said portion (9) being provided a flat part (14) in which buttonhole shaped holes (26) are designed capable to accept connection parts (20) with a widened free end part (20A) associated with a flat portion (23) of part (10) of above mentioned tank, said connection parts (20) and buttonholes (26) defining means capable to allow bayonet cap coupling between tank (4) and pump (2), in flat portion (23) of above said part (10) of tank, apertures (24) are provided in communication with ducts (13) provided in pump (3) body which open in this last one.

6. Pump-tank assembly unit as claimed in claim 1, **characterized in that** attachment means (18) of tank on pump (3) body are included.

## Patentansprüche

1. Pumpen-Tank-Anordnung einer Bremskreisflüssigkeit eines Motorrads von dem Typ, der eine Pumpe (2), die mit ihrem eigenen Gehäusekörper (3) vorgesehen ist, und einen Tank (4) umfasst, wobei die Anordnung (1) Lenkstangen (7) eines Fahrzeugs zugeordnet ist, wobei der Tank (4) von dem Gehäusekörper der Pumpe (3) trennbar ist, **dadurch gekennzeichnet, dass** Kupplungsmittel vom Bayonettverschlusstyp enthalten sind (20, 26), die dazu in der Lage sind, eine betriebsmäßige Kupplung zwischen dem Tank und dem Pumpengehäusekörper (3) zu erlauben.

2. Pumpen-Tank-Anordnung nach Anspruch 1, **dadurch gekennzeichnet, dass** die Mittel (20, 26), die dazu in der Lage sind, eine Bayonettverschlusskupplung zu erlauben, in dem Pumpengehäusekörper (3) und dem Tank (4) vorgesehen sind, wobei die Kupplung zwischen diesen Teilen in direkter Weise erreichbar ist.

3. Pumpen-Tank-Anordnung nach Anspruch 1, **dadurch gekennzeichnet, dass** die Mittel (20, 26), die dazu in der Lage sind, eine Bayonettverschlusskupplung zu erlauben, an dem Pumpengehäusekörper (3), an dem Tank (4) und an gegenüberliegenden Endteilen einer Verbindungseinheit wie einer Hülse oder einer ähnlichen Einrichtung vorgesehen sind, die dazu in der Lage ist, eine voneinander entfernte Anordnung des Tanks (4) in Bezug auf den Pumpengehäusekörper (3) zu ermöglichen.

4. Pumpen-Tank-Anordnung nach Anspruch 2, **dadurch gekennzeichnet, dass** der Pumpengehäusekörper (3) einen Bereich (9) mit einem Gehäuse (11) aufweist, das dazu in der Lage ist, einen Teil (10) des Tanks (4) aufzunehmen, wobei in dem Bereich (9) Verbindungsteile (20) mit einem erweiterten freien Endteil (20A) vorgesehen sind, die dazu in der Lage sind, mit knopflochförmigen Öffnungen (26) zusammenzuwirken, die innerhalb eines flachen Bereichs (23) des Teils (10) des Tanks vorgesehen sind, wobei die Verbindungsteile (20) und die Knopflöcher (26) Mittel definieren, die dazu in der Lage sind, eine bayonettverschlussartige Kupplung zwischen dem Tank (4) und der Pumpe (2) zu erlauben, wobei in dem flachen Bereich (23) des oben erwähnten Teils (10) des Tanks Öffnungen (24) vorgesehen sind, die in Verbindung mit Leitungen (13) stehen, die in dem Pumpengehäusekörper (3) vorgesehen sind und die sich in das Letztere öffnen.

5. Pumpen-Tank-Anordnung nach Anspruch 2, **dadurch gekennzeichnet, dass** der Pumpengehäusekörper (3) einen Bereich (9) mit einem Gehäuse (11) aufweist, der dazu in der Lage ist, einen Teil (10) des Tanks (4) aufzunehmen, wobei in dem Bereich (9) ein flacher Teil (14) vorgesehen ist, in dem knopflochförmige Öffnungen (26) gebildet sind, die dazu in der Lage sind, Verbindungsteile (20) mit erweiterten freien Endteilen (20A) aufzunehmen, die einem flachen Bereich (23) des Teils (10) zugeordnet sind, wobei die Verbindungsteile (20) und die Knopflöcher (26) Mittel definieren, die dazu in der Lage sind, eine bayonettverschlussartige Kupplung zwischen dem Tank (4) und der Pumpe (2) zu erlauben, wobei in dem flachen Bereich (23) des oben erwähnten Teils (10) des Tanks Öffnungen (24) vorgesehen sind, die in Verbindung mit Leitungen (13) stehen, die in dem Pumpengehäusekörper (3) vorgesehen sind und die sich in das Letztere öffnen.

6. Pumpen-Tank-Anordnung nach Anspruch 1, **dadurch gekennzeichnet, dass** Tankbefestigungsmittel (18) an dem Pumpengehäusekörper (3) enthalten sind.

## Revendications

1. Dispositif de montage d'une pompe et d'un réservoir pour fluide d'un circuit de freinage d'une motocyclette, du type comprenant une pompe (2) pourvue de son propre carter (3), et un réservoir (4), ledit dispositif de montage (1) étant associé au guidon (7) du véhicule, ledit réservoir (4) étant séparable du carter (3) de pompe, **caractérisé en ce que** des moyens d'accouplement du type culot baïonnette (20, 26) sont prévus pour permettre un accouplement opérationnel entre le réservoir et le carter (3) de pompe.

2. Dispositif d'assemblage d'une pompe et d'un réservoir selon la revendication 1, **caractérisé en ce que** des moyens (20, 26) permettant un accouplement par culot baïonnette sont présents dans le carter (3) de pompe et le réservoir (4), permettant un accouplement direct entre ces organes.

3. Dispositif d'assemblage d'une pompe et d'un réservoir selon la revendication 1, **caractérisé en ce que** des moyens (20, 26) permettant un accouplement par culot baïonnette sont présents sur le carter (3) de pompe, sur le réservoir (4) et à des extrémités opposées d'un dispositif d'accouplement comme une douille ou un dispositif similaire permettant au réservoir (4) d'être placé à distance par rapport au carter (3) de pompe.

4. Dispositif d'assemblage d'une pompe et d'un réservoir selon la revendication 2, **caractérisé en ce que** le carter (3) de pompe comporte une partie (9) ayant un logement (11) pouvant recevoir une partie (10) du réservoir (4), ladite partie (9) comportant des parties d'accouplement (20) à extrémité libre élargie (20A) pouvant coopérer avec des trous (26) en forme de boutonnières présents dans une partie plate (23) de la partie (10) du réservoir précité, lesdits dispositifs d'accouplement (20) et boutonnières (26) définissant des moyens permettant un accouplement du type culot baïonnette entre le réservoir (4) et la pompe (2), la partie plate (23) de ladite partie (10) du réservoir comportant des ouvertures (24) communiquant avec des conduits (13) présents dans le carter (3) de pompe et débouchant dans ce dernier.

5. Dispositif d'assemblage d'une pompe et d'un réservoir selon la revendication 2, **caractérisé en ce que** le carter (3) de pompe comporte une partie (9) pourvue d'un logement (11) apte à recevoir une partie (10) du réservoir (4), ladite partie (9) comportant une partie plane (14) dans laquelle des trous (26) en forme de boutonnières sont conçus pour recevoir des parties d'accouplement (20) à extrémité avant élargie (20A) associée à une partie plate (23) de la partie (10) du réservoir précité, lesdites parties d'accouplement (20) et boutonnières (26) définissant des moyens aptes à permettre un accouplement du type culot baïonnette entre le réservoir (4) et la pompe (2), des ouvertures (24) ménagées dans la partie plate (23) de ladite partie (10) du réservoir communiquant avec des conduits (13) présents dans le carter (3) de pompe et débouchant dans ce dernier.

6. Dispositif d'assemblage d'une pompe et d'un réservoir selon la revendication 1, **caractérisé en ce que** lesdits moyens de fixation (18) du réservoir sur le carter (3) de pompe sont inclus.
